# EUROPEAN PATENT APPLICATION

(11) **EP 2 570 355 A1**
(43) Date of publication of application: **20.03.2013**
(21) Application number: 12181782.9
(22) Date of filing: 24.08.2012
(51) Int. Cl.: B65D 5/32, B65D 71/10

(54) **Protective packaging assembly for brake discs and/or brake drums**

(30) Priority: 15.09.2011 BR 11046155
(71) Applicant: Jofund S.A., Joinville - Santa Caterina (BR)
(72) Inventor: Oliveira Ludwig, Eurico Marcelo, Joinville, Santa Catarina (BR); Boettcher Sebben, Marcos Alexandre, Joinville, Santa Catarina (BR); Vieira Schmidt, Marco Aurélio, Joinville, Santa Catarina (BR)
(74) Representative: Feldmann, Clarence Paul

(57) **Abstract**

The present invention relates to a protective packaging assembly for brake discs and/or brake drums comprised of two structural parts (2) made of renewable material, having supplementary shapes that fit together so as to create a packing cradle (B) for the braking elements, said structural parts being covered by a flexible heat-shrinkable film (3) to form the packaging assembly.

## Description

The present invention relates to a protective packaging assembly, specifically for brake discs and/or brake drums, comprised of two structural parts made of renewable material, having supplementary shapes that fit together, so as to create a convenient packing cradle for the braking elements, said structural parts being covered by a flexible heat-shrinkable film to form the packaging assembly.

Sealed packaging for brake discs and/or brake drums for protection against external agents and harmful environmental conditions, said packaging being made of rigid material, plastic or cardboard, are known in the state of the art.

An example of such packaging assemblies is proposed in the patent document MU7701997-0 which discloses a package made of rigid plastic with a fitting system between the cover upper face and the base lower face so as to make it easier to vertically stacking packages.

One of the drawbacks of existing packaging systems is the need to transport them in the mounted position. Because of that, such packages take a great amount of space for they are hollow, that is, they are provided with a large volume of space on their inside filled with air, thus affecting the use of space for their transportation from the place they are produced up to the place they are going to accommodate brake discs and/or brake drums and then being sealed.

Another drawback from the packages in the state of the art it that they have to be made in several different sizes to be compatible with the various sizes of brake discs and/or brake drums currently available on the market.

In addition, still another drawback from those packages is the use of a large amount of plastic material in their manufacturing, thus making it more difficult to recycle them. Even so, such plastic material is required so that said packages may be able to meet their technical and functional specifications. Moreover, in order for the illustrations and information on the brake discs and/or brake drums to be packaged are exhibited, adhesive labels need to be attached to the packaging itself, as it is impossible to print illustrations and information on the package body. Another problem thus arises when the adhesive label has to be removed from the package for further recycling of those materials.

Disadvantageously, the material used in the manufacturing and design of such packages does not allow for a preview of brake discs before package is opened by seller or end consumer. Thus, a mechanic cannot be sure of the compatibility between the brake disc being purchased and the brake disc to be replaced without opening package first. Moreover, it is not possible to know if the part inside the package has been damaged by humidity before opening the package, thus preventing inventory from being checked.

A further drawback lies in the fact that such packages are likely to suffer physical deformation or even break due to the action of any external physical force, thus depriving the package from its airtight feature and allowing the entry of external agents that are harmful for the conservation of the part inside the package such as gases and moisture. Besides, the chemical composition of package material must be precisely controlled because its exposure to low temperatures may cause cracks on the package.

Aiming to solve the above mentioned problems, the present invention proposes a protective packaging assembly for brake discs and/or brake drums comprising a heat-shrinkable plastic film and two parts having supplementary shapes and being initially flat in such a way that, after being properly folded, such parts fit together to create a convenient package for brake discs and/or brake drums, both protecting and storing them.

Another object of the present invention is to provide a packaging assembly that allows for a preview of brake discs and/or brake drums thus providing a display of information related to packed brake discs and/or brake drums without the need to open the package. Thus, a mechanic can compare the brake disc being purchased with the brake disc to be replaced and avoid mistakes when buying them. Besides, it is possible to inspect brake discs and/or brake drums to check their condition, again with no need to open the package.

Another object of the present invention is a package protected by a heat shrinkable plastic film capable of fully wrapping and protecting brake discs and/or brake drums against entry of air gases, moisture and any other external agents that could be damaging to those parts, packaging being subsequently sealed by another heat shrinkable film. Such a design also avoids entry of external agents that are harmful for the packed parts due to kneading, falls or cracks on the package, even when exposed to low temperatures.

Another object of the present invention is the creation of a package which is compatible with brake discs and/or brake drums of different thicknesses and sizes.

Still another object of the present invention is a package manufactured in ecologically friendly material such as cardboard or any other low cost renewable material, thus reducing to a minimum the need to use polymer materials that are difficult to recycle and also allowing for the printing of illustrations and information directly on the package body and dispensing the use of additional adhesive materials for that purpose. Such design makes it also easier to separate the plastic material from the renewable material for recycling purposes.

Schematic figures from a specific embodiment of the present invention are shown below, whose sizes and proportiLons are not necessarily the actual ones, because the purpose of such figures is simply to didactically present the several different aspects of the present invention, and whose scope of rights is determined only from the scope of the invention in the attached claims.

### Brief description of drawings:

The present invention will be described below with reference to the attached drawings, in which:
- Figure 1 is an exploded perspective view of the packaging assembly (1) of the present invention;
- Figure 2 is a perspective view of the packaging assembly (1) in the mounted position;
- Figure 3 is a perspective view of two braking elements (4) each sealed with a film (3) and positioned one over the other;
- Figure 4 is a view of a flat piece (10) used to form a structural part (2);
- Figure 5 is a view of a constructive variant of the flat piece (10);
- Figure 6 is a view of a flat piece (100) from another embodiment of the present invention;
- Figure 7 is a schematic view of several packaging assemblies (1) positioned upright to form a horizontal pile: and
- Figure 8 is another schematic view of several packaging assemblies (1) horizontally positioned to form a vertical pile.

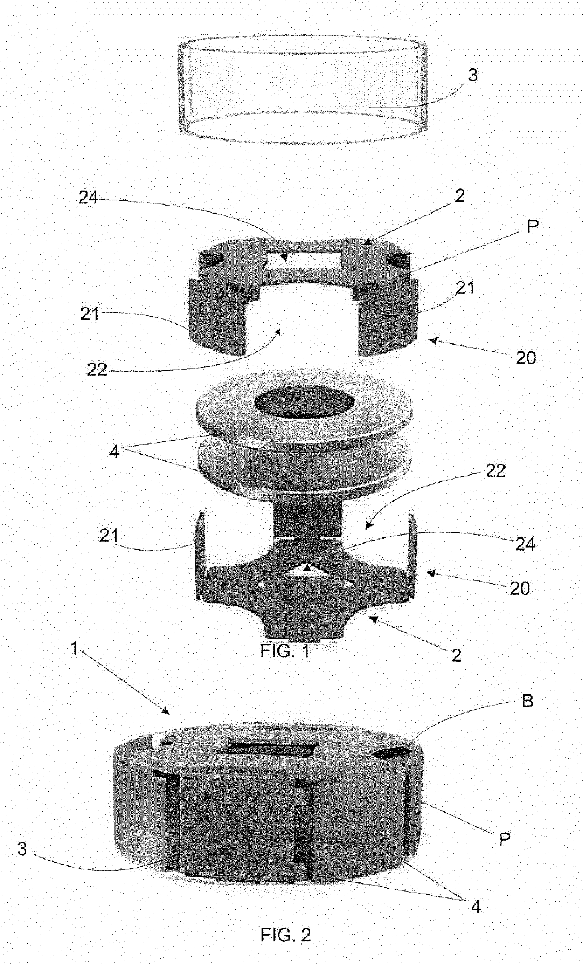

According to the figures above, the present invention proposes a packaging assembly (1), as illustrated in figure 2, comprised of two structural parts (2) made of renewable material, having supplementary shapes that fit together so as to create a packing cradle (B) for brake discs and/or brake drums, defined as braking elements (4), said structural parts being covered by a flexible and resistant film (3), preferably a heat-shrinkable plastic material, used to close and/or seal the packaging assembly (1).

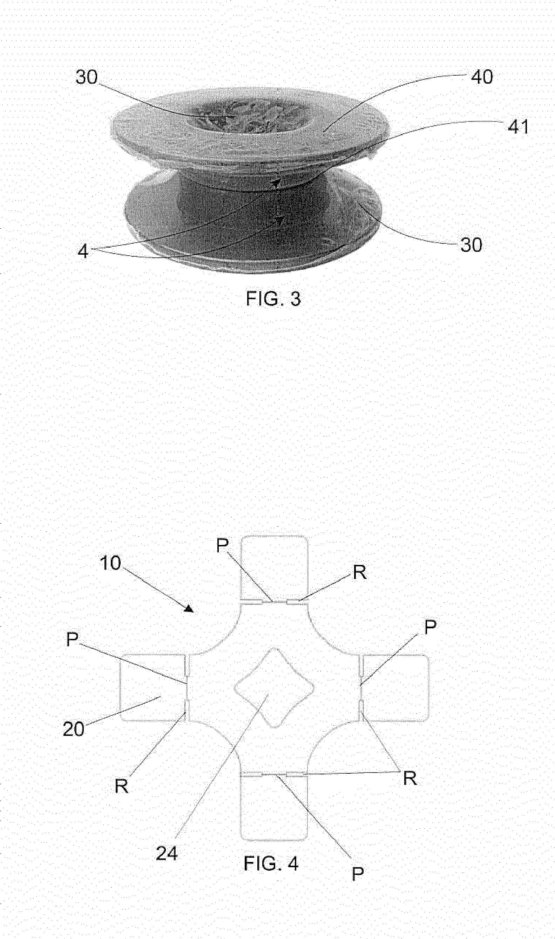

As illustrated in figures 1 and 4, said structural part (2) is formed from a flat piece (10) made of folding resistant material, preferably cardboard, provided with folding segments (20) defined from at least one folding point (P).

As an option, each structural part (2) can be molded from a resistant and renewable material, such as cardboard, and, preferably from molded pulp, and it may be comprised of at least two perpendicular flanges (21) to form the packaging assembly (1) when fit together. Thus, the part (2) is made in its final shape dispensing the bending process of the flat piece (10) through the folding points (P).

Said structural part (2) is provided with openings (22) interspersed with the flanges (21), said openings (22) being provided to receive the flanges (21) from another structural part (2), thus forming the packing (1) cradle (B). Preferably, each structural part (2) is provided with at least one viewing window (24) to allow for the preview of the fitting holes (not illustrated) for the braking elements (4) inside the structural parts (2), so as to enable a mechanic to compare and be sure each braking element (4) being purchased is compatible with the braking element (4) to be replaced without the need to open the package (1).

Optionally, as illustrated in figure 3, the packaging assembly (1) of the present invention further comprises films (30) made of flexible resistant materials, preferably heat-shrinkable plastic materials. Said films (30) are used to cover and protect at least one braking element (4) with no contact between the braking element (4) and the mechanic's hands, or any other external agent that may be harmful for the braking element (4) operation up to the moment it is installed in the vehicle (not illustrated).

In a constructive variant of the packaging assembly (1), the sides of the structural parts (2), when fit together, are wrapped in at least one adhesive strap (not illustrated), to substitute the film (3).

In a preferred embodiment, according to figure 4, flat piece (10) is comprised of cut-outs (R) arranged on the folding points (P), which ensure the folding segments (20) remain positioned at approximately 90 degrees to form the structural part (2) during the bending process. Besides, said cut-outs (R) enable definition of the packaging assembly external configuration when heat-shrinkable film is applied (3).

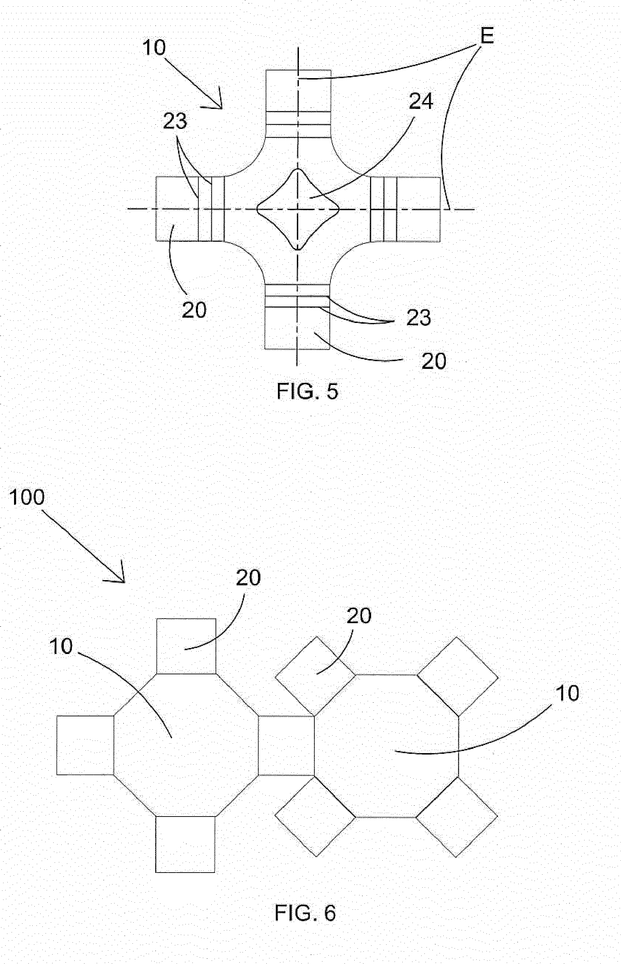

Figure 5 illustrates a constructive variant of the flat piece (10) which is provided with creases (23) sequentially spaced on the folding segments (20) in a concentric way and with similar distances in relation to the central axes (E), so as to facilitate folding of referred segments (20) to create perpendicular flanges (21) (see figure 1), said creases (23) being positioned with similar distances to the several diameters of the braking elements (4), such as brake discs and/or brake drums to be packaged by the packaging assembly (1).

Preferably, an operator is required to place braking elements (4) in the packaging assembly (1), already duly covered by the heat-shrinkable film (30), on a flat piece (10), then folding each segment (20) at the folding point (P) or at the crease (23) positioned closer to the braking elements (4) edge so as to form the perpendicular flanges (21) of the structural part (2).

Subsequent to that, another flat piece (10) must be folded so that its shape is the same as the first one, and positioned in such a way that its perpendicular flanges (21) seat on the openings (22) of the first structural part (2) and cradle the braking elements (4). According to the different sizes of braking elements (4), the perpendicular flanges (21) can take different lengths. That length, tough, cannot be smaller than the distance between the base (40) of a braking element (4) and the beginning (41) of the other braking element (4) being arranged on the first one after such parts (2) are positioned one over the other, otherwise the flanges (21) of a structural part (2) will not fit together with the openings (22) of the other structural part (2), thus preventing the interference between the flanges (21) and allowing both free rotation and radial movements thereof causing instability on the packaging assembly (1).

Therefore, packaging assembly (1) minimum height will be approximately the height of a structural part (2), while maximum height will be approximately twice the height of a structural part (2), assuring a good physical structure to the packaging assembly (1), in any size variation according to the sizes of packed braking elements (4).

After above mentioned stages, structural parts (2) are covered by a film (3) and then go through a thermal process to form the packaging assembly (1) so that it is sealed by the film (3) itself.

In another embodiment of the present invention, as illustrated in figure 6, cradle (B) can be comprised of a flat piece (100) formed from two flat pieces (10) of the same shape and connected to each other by means of one of its folding segments (20), and it may or may not be provided with openings (24), as well as creases (23) and/or cut-outs (R) placed on the folding segments (2).

Therefore, braking elements (4), already previously covered by the heat-shrinkable film (30), are placed on a flat piece (10) of said flat piece (100). Each segment (20) is then folded so as the other flat piece (10) of the flat piece (100) is positioned over the braking elements (4) to be packed, arranged in parallel in relation to the lower flat piece (10) forming two structural parts (2), which make up the cradle (B) surrounding the braking elements (4). Later, structural parts (2) are covered by the film (3) to form the packaging assembly (1).

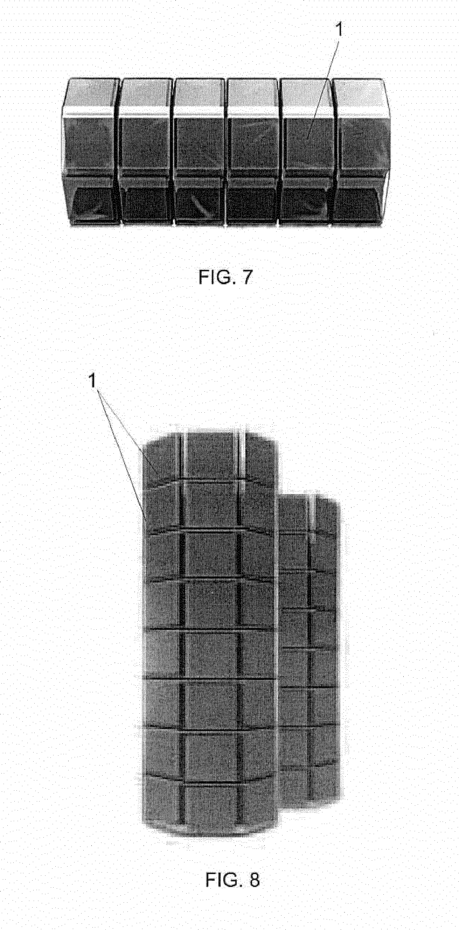

Said structural part (2) may comprise a convenient configuration so as packaging element (1) can be stored and/or piled both in the vertical and horizontal positions, as illustrated in figures 7 and 8.

Variations and modifications with respect to the embodiments shown and described in the attached drawings will readily occur to a person skilled in the art without departing from the scope of the present invention as defined in the attached claims.

## Claims

1. PROTECTIVE PACKAGING ASSEMBLY FOR BRAKE DISCS AND/OR BRAKE DRUMS, packaging assembly (1) being **characterized in that** it comprises structural parts (2) made of renewable material that fit together by means of perpendicular flanges (21) associated to openings (22) so as to create a packing cradle (B) for the braking element (4); and at least one film (3) covering said structural parts (2).

2. PROTECTIVE PACKAGING ASSEMBLY FOR BRAKE DISCS AND/OR BRAKE DRUMS, according to claim 1, **characterized in that** each structural part (2) is formed from a flat piece (10) provided with folding segments (20) defined from at least one folding point (P).

3. PROTECTIVE PACKAGING ASSEMBLY FOR BRAKE DISCS AND/OR BRAKE DRUMS, according to claims 1 and 2, optionally **characterized in that** the cradle (B) to be created from a flat piece (100) is provided with two flat pieces (10) of the same shape and connected to each other by means of one of its folding segments (20).

4. PROTECTIVE PACKAGING ASSEMBLY FOR BRAKE DISCS AND/OR BRAKE DRUMS, according to claims 2 and 3, optionally **characterized in that** flat piece (10) is comprised of cut-outs (R) arranged on the folding points (P).

5. PROTECTIVE PACKAGING ASSEMBLY FOR BRAKE DISCS AND/OR BRAKE DRUMS, according to claims 2 to 4, optionally **characterized in that** flat piece (10) is comprised of creases (23) placed on the folding segments (20) in a concentric way and with similar distances in relation to the flat piece (10) central axis.

6. PROTECTIVE PACKAGING ASSEMBLY FOR BRAKE DISCS AND/OR BRAKE DRUMS, according to claims 1 to 5, optionally **characterized in that** flat piece (10) is provided with at least two folding segments (20).

7. PROTECTIVE PACKAGING ASSEMBLY FOR BRAKE DISCS AND/OR BRAKE DRUMS, according to claim 1, optionally **characterized in that** it comprises at least one protective film (30) of at least one braking element (4).

8. PROTECTIVE PACKAGING ASSEMBLY FOR BRAKE DISCS AND/OR BRAKE DRUMS, according to claim 1, optionally **characterized in that** structural parts (2), when fit together, are wrapped in at least one adhesive strap (not illustrated).

9. PROTECTIVE PACKAGING ASSEMBLY FOR BRAKE DISCS AND/OR BRAKE DRUMS, according to claims 1 and 2, optionally **characterized in that** each structural part (2) is provided with at least one viewing window (24).

10. PROTECTIVE PACKAGING ASSEMBLY FOR BRAKE DISCS AND/OR BRAKE DRUMS, according to claim 1, optionally **characterized in that** each structural part (2) is molded from a resistant and renewable material, preferably from molded pulp.

11. PROTECTIVE PACKAGING ASSEMBLY FOR BRAKE DISKS AND/OR BRAKE DRUMS, according to claims 1 and 10, optionally **characterized in that** structural part (2) is provided with at least two perpendicular flanges (21).

12. PROTECTIVE PACKAGING ASSEMBLY FOR BRAKE DISCS AND/OR BRAKE DRUMS, according to claims 1 to 6, **characterized in that** flat pieces (10) are made of resistant folding material.

13. PROTECTIVE PACKAGING ASSEMBLY FOR BRAKE DISCS AND/OR BRAKE DRUMS, according to claim 1, **characterized in that** the film (3) is made of resistant flexible material.

14. PROTECTIVE PACKAGING ASSEMBLY FOR BRAKE DISCS AND/OR BRAKE DRUMS, according to claims 1 and 13, **characterized in that** the film (3) is made of heat-shrinkable material.

15. PROTECTIVE PACKAGING ASSEMBLY FOR BRAKE DISCS AND/OR BRAKE DRUMS, according to claim 7, **characterized in that** the film (30) is made of resistant flexible material.

16. PROTECTIVE PACKAGING ASSEMBLY FOR BRAKE DISCS AND/OR BRAKE DRUMS, according to claims 7 and 15, **characterized in that** the film (30) is made of heat-shrinkable material.
